# EUROPÄISCHE PATENTSCHRIFT

(11) **EP 4 554 829 B1**
(45) Veröffentlichungstag und Bekanntmachung des Hinweises auf die Patenterteilung: **01.04.2026**
(21) Anmeldenummer: 23741333.1
(22) Anmeldetag: 10.07.2023
(51) Int. Cl.: B60T 17/22, F16D 65/853

(54) **NASSLAUFENDE LAMELLENBREMSE, ELEKTRISCH ANGETRIEBENES FAHRZEUG, VERFAHREN ZUR KONTROLLE EINES ÖLZUSTANDS UND COMPUTERPROGRAMM**
WET-RUNNING DISC BRAKE, ELECTRICALLY DRIVEN VEHICLE, METHOD FOR CONTROL OF OIL CONDITION AND COMPUTER PROGRAM
FREIN À DISQUE À FONCTIONNEMENT HUMIDE, VÉHICULE À ENTRAÎNEMENT ÉLECTRIQUE, PROCÉDÉ DE CONTRÔLE DE L'ÉTAT DE L'HUILE ET PROGRAMME INFORMATIQUE

(30) Priorität: 11.07.2022 DE 102022207023
(43) Veröffentlichungstag der Anmeldung: 21.05.2025
(73) Patentinhaber: ZF Friedrichshafen AG, 88046 Friedrichshafen (DE)
(72) Erfinder: MÜLLER-LINKOWITSCH, Matthias, 88263 Horgenzell (DE); SIBLA, Christian, 88142 Wasserburg (DE); MARTIN, Daniel, 88048 Friedrichshafen (DE); BARTH, Wolfgang, 88074 Meckenbeuren (DE)
(74) Vertreter: Tergau & Walkenhorst Intellectual Property GmbH
(86) Internationale Anmeldenummer: PCT/EP2023/069012
(87) Internationale Veröffentlichungsnummer: WO 2024/013077

(56) Entgegenhaltungen:
- WO-A1-97/49591
- CN-U- 212 928 594
- DE-A1- 102006 031 787
- JP-A- 2014 172 423
- JP-A- 2015 221 702
- US-A1- 2004 003 977

## Beschreibung

Die Erfindung betrifft eine nasslaufende Lamellenbremse für ein elektrisch angetriebenes Fahrzeug, umfassend einen mit Kühlöl gefüllten Ölraum, der ein Lamellenpaket der Lamellenbremse einschließt sowie ein elektrisch angetriebenes Fahrzeug mit einem solcher Lamellenbremse.

Ferner betrifft die Erfindung ein Verfahren zur Kontrolle eines Ölzustands eines Kühlöls für eine Lamellenbremse eines elektrisch angetriebenen Fahrzeugs und ein Computerprogramm.

Konventionelle Betriebsbremsen insbesondere in elektrifizierten Fahrzeugen haben den Nachteil, dass diese überdimensioniert sind und auf Grund von geringer Nutzung sehr schnell verschleißen bzw. rosten. Dies führt zu einem hohen Wartungsaufwand, der vom Endkunden als Belastung durch hohe Kosten und eine verringerte Nutzungsmöglichkeit des Fahrzeuges wahrgenommen wird. Außerdem wird durch konventionelle Betriebsbremsen ein großer Anteil an Feinstaub freigesetzt, was einen negativen Einfluss auf die Umwelt hat. Weiterhin führt der Feinstaub zu einer starken Verschmutzung der Betriebsbremsen und hat somit ebenfalls einen negativen Einfluss auf die Wartungsintensität.

Die Ausführung der Betriebsbremsen als in das elektrifizierte Achssystem integrierte, nasslaufende Betriebsbremse (Lamellenbremse) hat den Nachteil, dass die maximal zulässige Bauteiltemperatur (Stahllamellentemperaturgrenze) durch die Materialeigenschaften des Kühlöls, wie dem Flammpunkt, dem Oxidationspunkt etc., begrenzt ist. Durch den Kontakt des Bauteils mit einer Bauteiltemperatur größer der maximal zulässigen Bauteiltemperatur zum Kühlöl kann es zu Ölschädigungen beispielsweise durch Verkohlung des Öls und somit zu einer Verringerung der Qualität des Öls kommen.

Die maximal zulässige Bauteiltemperatur ist dadurch bei nasslaufenden Bremsen deutlich geringer (ca. 300°C) ggü. luftgekühlten Betriebsbremsen (800°C) und kann insbesondere für Notsituationen wie beispielsweise einer Vollbremsung, bei der die Rekuperationsfunktion des elektrisch angetriebenen Fahrzeuges beispielsweise aufgrund einer Fehlfunktion nicht genutzt werden, ein reglementierender Faktor bei der Fahrzeugauslegung, Bremsenauslegung und den benötigten Kühlölvolumenstrom sein.

Mit der Problematik der Kühlung einer Lamellenbremse beschäftigt sich beispielsweise die DE 10 2006 031 787 A1 der Anmelderin. Zur Kühlung der Lamellenbremse in den geschlossenen Betriebsphasen der Lamellenbremse ist vorgesehen, dass das Kühlöl in Abhängigkeit vom Betriebszustand derselben in radial unterschiedlichen Richtungen über und/oder durch das Lamellenpaket leitbar ist. Dabei soll bei geöffneter Lamellenbremse das Kühlöl im Getriebegehäuse von radial innen nach radial außen durch und/oder über dieselbe geführt und dann in den Kühlölsumpf abgeleitet werden, während im Schlupfbetrieb oder bei geschlossener Lamellenbremse das Kühlöl von radial außen kommend nach radial innen durch die Lamellenbremse geführt wird. Das Lamellenpaket sollte dafür seitlich abgedichtet werden, um einen optimalen Durchfluss zu erreichen. Der Außen- und der Innenlamellenträger können radiale Öffnungen zur Zu- oder Ableitung des Kühlöls aufweisen. Die Ölzuführung geschieht durch ein gesondertes Ölzufuhrmittel, das beispielsweise als Ventil oder als ein radial an die Lamellenbremse heranführbares Bauteil ausgebildet ist, das den Ölzufluss steuert. Die Steuerung kann über den gleichen Steuerdruck erfolgen, mit dem auch der Kolben der Lamellenbremse betätigt wird.

Eine solche Lösung löst jedoch nicht das Problem, dass es durch die lokale Erwärmung des Kühlöls zu dessen Verschleiß kommt, der vom Fahrverhalten und auch von äußeren Einflüssen, wie der Notwendigkeit von Gefahrenbremsungen, abhängt. Erreicht das Kühlöl einen Ölzustand kritischer Ölschädigung kann der weitere Betrieb der Lamellenbremse auch zu deren Schädigung führen, so dass ein Wechsel des Kühlöls für den sicheren Betrieb des elektrisch angetriebenen Fahrzeugs zwingend notwendig ist.

Dokument JP 2014 172423 A offenbart ein Nasslauf-Bremssystem.

Dokument CN 212 928 594 U offenbart einen Bremssattel, der einen Sattelkörper mit einer Aufnahmevertiefung umfasst.

Dokument WO 97/49591 A1 offenbart ein Bremsdiagnosegerät für selbstfahrende Fahrzeuge.

Dokument DE 10 2006 031787 A1 offenbart ein Mehrscheiben-Bremssystem in einem Automatikgetriebe mit steuerbarer Kühlölversorgung.

Dokument US 2004/003977 A1 offenbart ein System und Verfahren zur Versorgung von Reibelementen in Automatikgetrieben mit Kühlflüssigkeit.

Dokument JP 2015 221702 A offenbart eine Kühlvorrichtung für Nasslauf-Mehrscheibenbremsen.

Es ist Aufgabe der Erfindung, Konzepte bereitzustellen, den Zustand des Kühlöls zu überwachen und einen Fahrzeugführer über den Ölzustand zu informieren.

Die Aufgabe wird für die eingangs beschriebene nasslaufende Lamellenbremse dadurch gelöst, dass an der nasslaufenden Lamellenbremse ein Ölbeobachter vorhanden ist, der einen Temperatursensor zum Ermitteln der Öltemperatur und eine Rechen- und Speichereinheit aufweist, wobei die Rechen- und Speichereinheit einen Ölzustand anhand eines zeitlichen Verlaufs der Öltemperatur bestimmt. Die Öltemperatur kann dabei vor allem aus einer direkt gemessenen oder berechneten Bauteiltemperatur der nasslaufenden Lamellenbremse abgeleitet werden. Im einfachsten Fall wird die Öltemperatur mit der Bauteiltemperatur gleichgesetzt, es sind aber auch andere Methoden denkbar, wie die Direktmessung der Temperatur des Kühlöls.

In einer vorteilhaften Ausgestaltung weist der Ölbeobachter einen Signalgeber auf, der im Falle, dass der bestimmte Ölzustand einer kritischen Ölschädigung entspricht, ein Signal abgibt. Dies bewirkt, dass der Ölzustand überwacht werden kann und damit Rückschlüsse auf die entsprechende Ölqualität gezogen werden können. So kann ein Ölwechsel zeitnah, im besten Fall so rechtzeitig erfolgen, dass das Fahrverhalten des elektrisch angetriebenen Fahrzeugs nicht gestört oder die Lamellenbremse nicht beschädigt wird. Erreicht das Kühlöl den Zustand kritischer Ölschädigung muss es aber nicht vollständig verschlissen sein. Es ist vielmehr hinreichend, wenn das Signal so abgegeben werden kann, dass eine Wartung rechtzeitig vor einem vollständigen Verschleiß des Kühlöls durchgeführt werden kann.

Dabei ist es besonders vorteilhaft, wenn für den Ölzustand der kritischen Ölschädigung in der Rechen- und Speichereinheit eine kritische Höchsttemperatur T₂ als Öltemperatur hinterlegt ist. Im Falle einer Gefahrenbremsung oder einer vergleichbaren außergewöhnlichen Situation kann es dazu kommen, dass das Kühlöl nahezu sofort vollständig verschleißt, da die Öltemperatur stark ansteigt. Auf diese Weise erfolgt ein sofortiger Hinweis, um eine Beeinträchtigung des Bremsverhaltens oder gar eine Beschädigung der Lamellenbremse zu vermeiden.

Eine alternative vorteilhafte Ausgestaltung besteht darin, dass in der Rechen- und Speichereinheit ein Berechnungsmodell hinterlegt ist, das dazu ausgelegt ist, aus dem Öltemperaturverlauf, gebildet aus einer erfassten Öltemperatur über der Zeit, den Ölzustand zu bestimmen. Dadurch wird sichergestellt, dass im Falle einer kritischen Ölschädigung ein hinterlegtes Servicekonzept aufgerufen werden kann, welches den Fahrer zu einem entsprechenden Service anleitet. In besonders vorteilhafter Ausgestaltung berücksichtigt das Berechnungsmodell eine Betriebszeit unterhalb einer Verschleißtemperatur T₁ bei der Bestimmung des Ölzustandes nicht, da hier höchstens eine marginale Ölschädigung auftritt. Auf diese Weise kann eine unnötige Wartung vermieden und/oder ein Serviceintervall vergrößert werden.

Die Aufgabe wird ebenfalls durch ein elektrisch angetriebenes Fahrzeug mit der gerade beschriebenen, nasslaufenden Lamellenbremse gelöst.

Ferner wird die Aufgabe durch ein Verfahren zur Kontrolle eines Ölzustands eines Kühlöls für eine Lamellenbremse eines elektrisch angetriebenen Fahrzeugs gelöst, welches die folgenden Schritte umfasst:
- Ermitteln einer Öltemperatur mit Hilfe eines Temperatursensors,
- Berechnung des Ölzustands anhand eines zeitlichen Verlaufs der Öltemperatur
   und
- Ausgabe eines Signals, wenn der Ölzustand den Zustand einer kritischen Ölschädigung erreicht.

Die Öltemperatur muss dabei, wie oben bereits erläutert, nicht zwingend direkt ermittelt werden. Es ist auch möglich, aus der Temperatur von Bauteilen der Lamellenbremse auf die Öltemperatur zu schließen oder diese gar mit der Bauteiltemperatur gleichzusetzen.

Dabei ist es vorteilhaft, wenn zur Berechnung des Ölzustands ein Ölausgangszustand aus einem Speicher einer Rechen- und Speichereinheit geladen, die Öltemperatur mit einer Verschleißtemperatur T₁ verglichen wird und für einen Zeitraum, währenddessen die Öltemperatur größer als die Verschleißtemperatur T₁ ist, eine kumulative Verschlechterung des Ölzustands bestimmt wird. Sobald die Öltemperatur die Verschleißtemperatur T₁ wieder unterschreitet, wird die kumulative Verschlechterung des Ölzustands als neuer Ölausgangszustand in den Speicher der Rechen- und Speichereinheit geschrieben. Auf diese Weise ist es möglich, den Zustand des Kühlöls kontinuierlich zu überwachen und eine kumulative Ölschädigung aufzuzeichnen.

Besonders vorteilhaft ist es, wenn die Verschlechterung anhand der Dauer des Zeitraums, eines Temperaturmodells, eines Ölschädigungsmodells oder einer Ölschädigungskurve bestimmt wird. Neben einer verbesserten Genauigkeit der Abschätzung der Ölschädigung können unterschiedliche Öltypen, Ausgangszustände oder auch die Bauart der Lamellenbremse berücksichtigt werden.

Auch ist es vorteilhaft, wenn die Verschleißtemperatur T₁ in einem Bereich von 230° bis 300°C liegt. Dies berücksichtigt, dass erst eine Erwärmung des Kühlöls auf Öltemperaturen, die zu einer Ölschädigung führen, stattfinden muss.

In einer alternativen günstigen Ausführung wird bei der Berechnung des Ölzustands die Öltemperatur mit einer kritischen Höchsttemperatur T₂ verglichen und bei Überschreitung der kritischen Höchsttemperatur T₂ ein kritischer Ölzustand festgestellt. Auf diese Weise kann ein Missbrauchszustand festgestellt werden, bei dem die Öltemperatur so hoch wird, dass von einem sofortigen, vollumfänglichen Verschleiß ausgegangen werden kann. Ein solcher Zustand kann zum Beispiel bei einer Gefahrenbremsung auftreten, bei der an der Lamellenbremse besonders hohe Temperatur auftreten können und dementsprechend auch die Öltemperatur stark ansteigt. Auch Defekte an der Lamellenbremse können unter Umständen einen solchen Missbrauchszustand hervorrufen.

Es ist ferner von Vorteil, wenn das Ermitteln der Öltemperatur derart erfolgt, dass die Öltemperatur kontinuierlich während des Betriebs des elektrisch angetriebenen Fahrzeugs aus einer kontinuierlich gemessenen Bauteiltemperatur abgeleitet wird. Somit müssen keine zusätzlichen Sensoren, die das Kühlöl direkt überwachen, in dem Fahrzeug verbaut werden. Ferner erlaubt die kontinuierliche Überwachung der Öltemperatur eine kontinuierliche Überwachung des Ölzustands.

Zuletzt wird die Aufgabe durch ein Computerprogramm gelöst, das Softwarebefehle aufweist, die, wenn sie von einem Rechner ausgeführt werden, das eben beschriebene Verfahren ausführen.

Die Erfindung wird nachfolgend anhand eines Ausführungsbeispiels und Figuren näher erläutert. Dabei zeigt:
- Fig. 1: eine schematische Darstellung einer nasslaufenden Lamellenbremse;
- Fig. 2: einen Graphen, der eine Öltemperatur über der Zeit darstellt und
- Fig. 3: einen weiteren Graphen, der eine kumulative Ölschädigung über der Zeit darstellt.

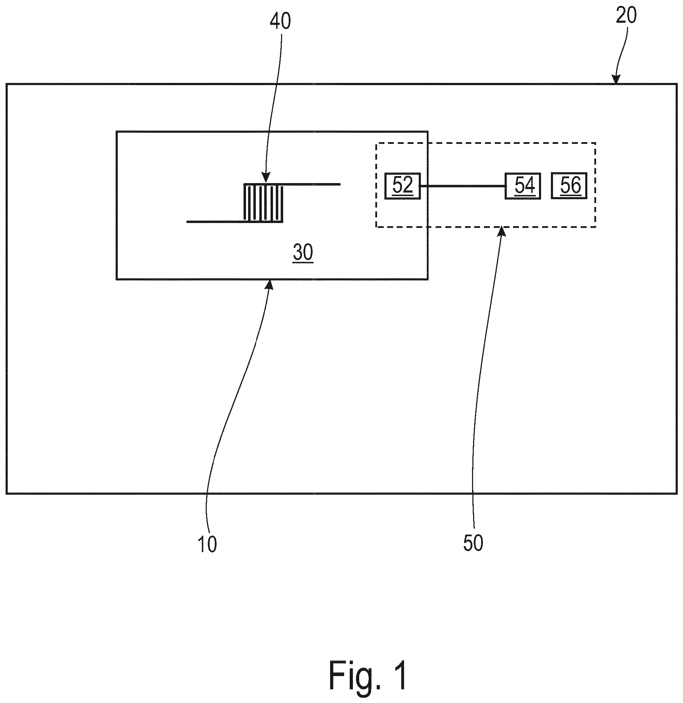

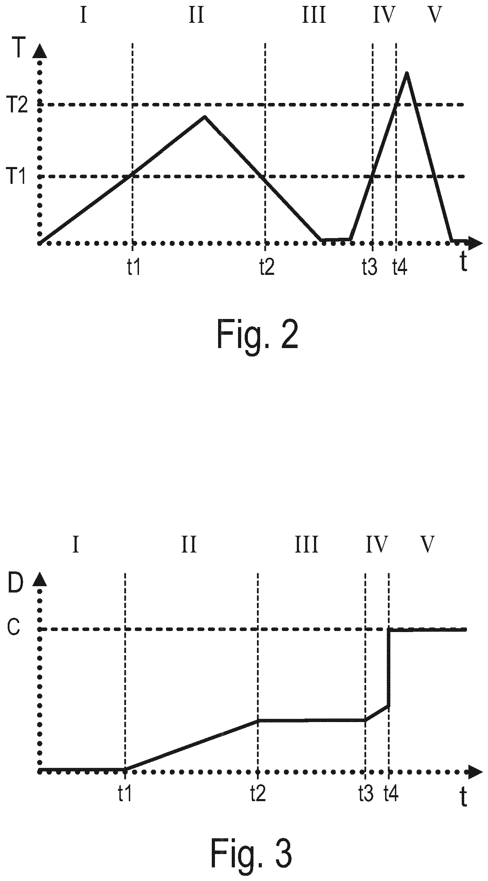

Gemäß einem schematisch mit **Fig. 1** dargestellten Ausführungsbeispiel umfasst eine nasslaufende Lamellenbremse 10 eines Fahrzeugs 20 einen Ölraum 30, der ein Lamellenpaket 40 der Lamellenbremse 10 einschließt. Ferner ist ein Ölbeobachter 50 vorhanden, der einen Temperatursensor 52 zum Ermitteln der Öltemperatur T und eine damit verbundene Rechen- und Speichereinheit 54 aufweist. Dieser bestimmt einen Ölzustand anhand eines zeitlichen Verlaufs der Öltemperatur. Ein Beispiel eines solchen Verlaufs der Öltemperatur T ist in **Fig. 2****,** eine diesem Verlauf entsprechende Ölschädigung D (Degradation) ist in **Fig. 3** dargestellt.

Zunächst steigt die Öltemperatur T in Abschnitt I an, bis sie eine Verschleißtemperatur T₁ erreicht, welche einen ersten Schwellwert darstellt. Bis zu diesem Zeitpunkt verzeichnet der Ölbeobachter keinerlei Schädigung D, da in diesem Temperaturbereich keine nennenswerte Schädigung bzw. Degradation des Kühlöls auftritt. Mit dem Überschreiten der Verschleißtemperatur T₁ in Abschnitt II wird eine Öltemperatur T erreicht, bei der es zu einer Ölschädigung D kommt, so dass auch die Ölschädigung D in **Fig. 3** stetig zunimmt. Dies kann zum Beispiel beim einfachen Bremsen eines mit einer erfindungsgemäßen Lamellenbremse ausgestatteten Fahrzeugs der Fall sein. Sinkt die Öltemperatur T wieder unter den Schwellwert der Verschleißtemperatur T1, wie in Abschnitt III dargestellt, wird diese Betriebszeit bei der Bestimmung des Ölzustands nicht berücksichtigt, da die Öltemperatur T wieder unterhalb der Verschleißtemperatur T₁ liegt. Die bisherige Ölschädigung D wird jedoch gespeichert und addiert sich kumulativ, bis es bei der Wartung des elektrisch angetriebenen Fahrzeugs ausgetauscht und der Ölbeobachter manuell oder automatisch zurückgesetzt wird.

Im einfachsten Fall zählt der Ölbeobachter die Zeit, wie lange die Verschleißtemperatur T₁ überschritten worden ist und nimmt nach einer maximalen Verschleißzeit an, dass das Kühlöl zu dem entsprechenden Zeitpunkt vollständig verschlissen ist, also ein kritischer Ölzustand C vorliegt. Vorzugsweise ist in der Rechen- und Speichereinheit jedoch ein Berechnungsmodell hinterlegt, das dazu ausgelegt ist aus dem Öltemperaturverlauf, gebildet aus einer erfassten Öltemperatur T über die Zeit, den Ölzustand zu bestimmen. Im Allgemeinen muss sich der Zustand des Kühlöls nicht linear verschlechtern, je nach Modell der Lamellenbremse, Temperaturverlauf und Ölzusammensetzung kann es auch zu einem langsam beginnenden und später schnell ansteigenden Ölverschleiß kommen.

In der Rechen- und Speichereinheit ist weiterhin eine kritische Höchsttemperatur T₂ als ein zweiter Schwellwert hinterlegt. Steigt die Öltemperatur T wieder an und überschreitet in Abschnitt IV die Verschleißtemperatur T₁, kommt es zum regulären Ölverschleiß wie oben beschrieben. Übersteigt die Öltemperatur T jedoch die kritische Höchsttemperatur T₂, wie ein Abschnitt V gezeigt, geht der Ölbeobachter sofort von einem vollständigen Verbrauch des Kühlöls aus, was einem Ölzustand einer kritischen Ölschädigung C entspricht. Über einen Signalgeber 56 wird nun ein Signal abgegeben, welches den Führer des elektrisch angetriebenen Fahrzeugs auf die kritische Ölschädigung C hinweist und auffordert, die nächstliegende Fachwerkstatt aufzusuchen. Dieser bleibt bestehen, auch wenn sich das Kühlöl im Anschluss wieder abkühlt.

Zuletzt soll noch die Rechen- und Speichereinheit kurz beschrieben werden. Bei dieser kann es sich um eine logische Schaltung, aber auch um einen Rechner handeln, der die Messwerte digital auswertet. Um den Ölzustand wird zunächst ein Ölausgangszustand aus einem Speicher der Rechen- und Speichereinheit geladen und der weitergehenden Analyse zugrunde gelegt. Nachdem die Öltemperatur wie oben beschrieben mit Hilfe des Temperatursensors ermittelt wurde, wird sie mit der Verschleißtemperatur T₁ und der kritischen Höchsttemperatur T₂ verglichen. Dies erfolgt zum Beispiel kontinuierlich während des Betriebs des elektrisch angetriebenen Fahrzeugs, wobei die Öltemperatur aus einer kontinuierlich gemessenen Bauteiltemperatur abgeleitet wird. Wird die kritische Höchsttemperatur T₂ überschritten, wird sofort ein kritischer Ölzustand festgestellt und im Speicher der Rechen- und Speichereinheit hinterlegt. Für den Zeitraum in Abschnitt II der **Fig. 2** und, währenddessen die Öltemperatur größer als die Verschleißtemperatur T₁ ist, welche je nach verwendeten Kühlöl in einem Bereich von 230°C bis 300 °C liegt, wird eine kumulative Verschlechterung des Ölzustands bestimmt. Diese wird anhand der Dauer des Zeitraums, eines Temperaturmodells, eines Ölschädigungsmodells oder einer Ölschädigungskurve bestimmt. Hier können sowohl empirisch bestimmte Verschlechterungskurven in eine Datenbank geladen werden, auf welche die Rechen- und Speichereinheit zugreift, oder komplexe Simulationen je nach Anwendungsbereich der Lamellenbremse verwendet werden. Abschließend wird, sobald die Öltemperatur die Verschleißtemperatur T₁ wieder unterschreitet, die kumulative Verschlechterung des Ölzustands als neuer Ölausgangszustand in den Speicher der Rechen- und Speichereinheit geschrieben.

Das eben beschriebene Verfahren lässt sich leicht in ein Computerprogramm implementieren, welches Softwarebefehle aufweist, die auf einem Rechner ausgeführt werden. In diesem Fall übernimmt der Rechner die Funktion der Rechen- und Speichereinheit.

## Patentansprüche

1. Nasslaufende Lamellenbremse (10) für ein elektrisch angetriebenes Fahrzeug (20), umfassend einen mit Kühlöl gefüllten Ölraum (30), der ein Lamellenpaket (40) der Lamellenbremse (10) einschließt, wobei an der nasslaufenden Lamellenbremse (10) ein Ölbeobachter (50) vorhanden ist, der einen Temperatursensor (52) zum Ermitteln der Öltemperatur und eine Rechen- und Speichereinheit (54) aufweist, **dadurch gekennzeichnet, dass** die Rechen- und Speichereinheit (54) derart ausgebildet ist, um einen Ölzustand bzw. eine Ölschädigung (D) anhand eines zeitlichen Verlaufs der Öltemperatur zu bestimmen.

2. Nasslaufende Lamellenbremse nach Anspruch 1, **dadurch gekennzeichnet,**
**dass** der Ölbeobachter (50) einen Signalgeber (56) aufweist, der im Falle, dass der bestimmte Ölzustand (D) einer kritischen Ölschädigung (C) entspricht, ein Signal abgibt.

3. Nasslaufende Lamellenbremse nach Anspruch 2, **dadurch gekennzeichnet,**
**dass** für den Ölzustand der kritischen Ölschädigung (C) in der Rechen- und Speichereinheit (54) eine kritische Höchsttemperatur T₂ als Öltemperatur hinterlegt ist.

4. Nasslaufende Lamellenbremse nach einem der Ansprüche 1 bis 3, **dadurch gekennzeichnet,**
**dass** in der Rechen- und Speichereinheit (54) ein Berechnungsmodell hinterlegt ist, das dazu ausgelegt ist aus dem Öltemperaturverlauf, gebildet aus einer erfassten Öltemperatur über die Zeit, den Ölzustand zu bestimmen.

5. Nasslaufende Lamellenbremse nach Anspruch 4 **dadurch gekennzeichnet,**
**dass** das Berechnungsmodell eine Betriebszeit unterhalb einer Verschleißtemperatur T₁ bei der Bestimmung des Ölzustandes nicht berücksichtigt.

6. Elektrisch angetriebenes Fahrzeug (20) mit einer nasslaufenden Lamellenbremse (10) nach einem der vorhergehenden Ansprüche.

7. Verfahren zur Kontrolle eines Ölzustands eines Kühlöls für eine Lamellenbremse eines elektrisch angetriebenen Fahrzeugs, umfassend die Schritte:
• Ermitteln einer Öltemperatur mit Hilfe eines Temperatursensors und
• Berechnung des Ölzustands anhand eines zeitlichen Verlaufs der Öltemperatur
und
• Ausgabe eines Signals, wenn der Ölzustand den Zustand einer kritische Ölschädigung C erreicht.

8. Verfahren nach Anspruch 7, **dadurch gekennzeichnet, dass**
• zur Berechnung des Ölzustands ein Ölausgangszustand aus einem Speicher einer Rechen und Speichereinheit (54) geladen wird,
• die Öltemperatur mit einer Verschleißtemperatur T₁ verglichen wird und
• für einen Zeitraum, währenddessen die Öltemperatur größer als die Verschleißtemperatur T₁ ist, eine kumulative Verschlechterung des Ölzustands bestimmt wird und,
• sobald die Öltemperatur die Verschleißtemperatur T₁ wieder unterschreitet, die kumulative Verschlechterung des Ölzustands als neuer Ölausgangszustand in den Speicher der Rechen- und Speichereinheit (54) geschrieben wird.

9. Verfahren nach Anspruch 8, **dadurch gekennzeichnet, dass**
• die Verschlechterung anhand der Dauer des Zeitraums, eines Temperaturmodells, eines Ölschädigungsmodells oder einer Ölschädigungskurve bestimmt wird.

10. Verfahren nach einem der Ansprüche 7 bis 9, **dadurch gekennzeichnet,**
**dass** die Verschleißtemperatur T₁ in einem Bereich von 230° bis 300°C liegt.

11. Verfahren nach einem der Ansprüche 7 bis 10, **dadurch gekennzeichnet, dass**
• bei der Berechnung des Ölzustands die Öltemperatur mit einer kritischen Höchsttemperatur T₂ verglichen wird und
• bei Überschreitung der kritischen Höchsttemperatur T₂ ein kritischer Ölzustand C festgestellt wird.

12. Verfahren nach einem der Ansprüche 7 bis 11, **dadurch gekennzeichnet,**
**dass** das Ermitteln der Öltemperatur derart erfolgt, dass die Öltemperatur kontinuierlich während des Betriebs des elektrisch angetriebenen Fahrzeugs aus einer kontinuierlich gemessenen Bauteiltemperatur abgeleitet wird.

13. Computerprogramm, das Softwarebefehle aufweist, die, wenn sie vom Rechner der Lamellenbremse nach Anspruch 1 ausgeführt werden, ein Verfahren nach einem der Ansprüche 7 bis 12 ausführen.

## Claims

1. A wet-running multi-disc brake (10) for an electrically driven vehicle (20), comprising an oil chamber (30) which is filled with cooling oil and which encloses a disc pack (40) of the multi-disc brake (10), wherein an oil monitoring means (50) is present at the wet-running multi-disc brake (10), which oil monitoring means has a temperature sensor (52) for ascertaining the oil temperature and a computing and storage unit (54), **characterized in that** the computing and storage unit (54) is formed in such a manner in order to determine an oil status or oil damage (D) on the basis of a time curve of the oil temperature.

2. The wet-running multi-disc brake according to Claim 1, **characterized in that** the oil monitoring means (50) has a signal transmitter (56) which outputs a signal in the event that the oil status (D) that is determined corresponds to critical oil damage (C).

3. The wet-running multi-disc brake according to Claim 2, **characterized in that** for the oil status of the critical oil damage (C), a critical maximum temperature T₂ is stored as oil temperature in the computing and storage unit (54).

4. The wet-running multi-disc brake according to any one of Claims 1 to 3, **characterized in that** a calculation model is stored in the computing and storage unit (54), which is configured to determine the oil status from the oil temperature profile, which is formed from a detected oil temperature over time.

5. The wet-running multi-disc brake according to Claim 4, **characterized in that** the calculation model does not take an operating time below a wear temperature T₁ into consideration in the determination of the oil status.

6. An electrically driven vehicle (20) having a wet-running multi-disc brake (10) according to any one of the preceding claims.

7. A method for monitoring an oil status of a cooling oil for a multi-disc brake of an electrically driven vehicle, comprising the steps:
• ascertaining an oil temperature with the aid of a temperature sensor, and
• calculating the oil status on the basis of a time curve of the oil temperature, and
• outputting a signal if the oil status reaches the status of critical oil damage C.

8. The method according to Claim 7, **characterized in that**
• to calculate the oil status, an initial oil status is loaded from a memory of a computing and storage unit (54),
• the oil temperature is compared with a wear temperature T₁, and
• a cumulative deterioration of the oil status is determined for a time period during which the oil temperature is greater than the wear temperature T₁, and
• as soon as the oil temperature falls below the wear temperature T₁ again, the cumulative deterioration of the oil status is written to the computing and storage unit (54) as new initial oil status.

9. The method according to Claim 8, **characterized in that**
• the deterioration is determined based on the duration of the time period of a temperature model, an oil damage model or an oil damage curve.

10. The method according to any one of Claims 7 to 9, **characterized in that** the wear temperature T₁ is in a range from 230°C to 300°C.

11. The method according to any one of Claims 7 to 10, **characterized in that**
• the oil temperature is compared with a critical maximum temperature T₂ during the calculation of the oil status, and
• a critical oil status C is established when the critical maximum temperature T₂ is exceeded.

12. The method according to any one of Claims 7 to 11, **characterized in that** the oil temperature is ascertained in such a manner that the oil temperature is derived continuously from a continuously measured component temperature during the operation of the electrically driven vehicle.

13. A computer program which has software commands which execute a method according to any one of Claims 7 to 12 when they are executed by the computer of the multi-disc brake according to Claim 1.

## Revendications

1. Frein à lamelles mouillé (10), destiné à un véhicule (20) électrique, comprenant une chambre à huile (30) remplie d'huile de refroidissement, qui inclut un paquet de lamelles (40) du frein à lamelles (10), sur le frein à lamelles (10) mouillé étant présent un contrôleur d'huile (50) qui comporte un capteur de température (52) pour déterminer la température de l'huile et une unité de calcul et de mémoire (54), **caractérisé en ce que** l'unité de calcul et de mémoire (54) est conçue de sorte à déterminer un état de l'huile ou une dégradation de l'huile (D) à l'aide d'une courbe temporelle de la température d'huile.

2. Frein à lamelles mouillé selon la revendication 1, **caractérisé en ce que** le contrôleur d'huile (50) comporte un générateur de signaux (56) qui délivre un signal dans le cas où l'état de l'huile (D) déterminé correspond à une dégradation critique de l'huile (C).

3. Frein à lamelles mouillé selon la revendication 2, **caractérisé en ce que** pour l'état de l'huile de dégradation critique de l'huile (C), une température de crête T₂ critique est sauvegardée dans l'unité de calcul et de mémoire (54), en tant que température de l'huile.

4. Frein à lamelles mouillé selon l'une quelconque des revendications 1 à 3, **caractérisé en ce que** dans l'unité de calcul et de mémoire (54) est sauvegardé un modèle de calcul, qui est conçu pour déterminer l'état de l'huile à partir de la courbe de température d'huile, constituée d'une température d'huile détectée dans le temps.

5. Frein à lamelles mouillé selon la revendication 4 **caractérisé en ce que** lors de la détermination l'état de l'huile, le modèle de calcul ne prend pas en compte un temps de fonctionnement en-dessous d'une température d'usure T₁.

6. Véhicule (20) électrique, pourvu d'un frein à lamelles mouillé (10) selon l'une quelconque des revendications précédentes.

7. Procédé, destiné à contrôler un état de l'huile d'une huile de refroidissement pour un frein à lamelles d'un véhicule électrique, comprenant les étapes consistant à :
• déterminer une température de l'huile à l'aide d'un capteur de température et
• calculer l'état de l'huile à l'aide d'une courbe temporelle de la température de l'huile et
• délivrer un signal, si l'état de l'huile atteint celui d'une dégradation critique C de l'huile.

8. Procédé selon la revendication 7, **caractérisé en ce que**
• pour calculer l'état de l'huile, un état initial de l'huile est téléchargé à partir d'une mémoire d'une unité de calcul et de mémoire (54),
• la température de l'huile est comparée avec une température d'usure T₁ et
• pour une période pendant laquelle la température de l'huile est supérieure à la température d'usure T₁, une détérioration cumulative de l'état de l'huile est déterminée et
• dès que la température de l'huile est à nouveau inférieure à la température d'usure T₁, la détérioration cumulative de l'état de l'huile est inscrite dans la mémoire de l'unité de calcul et de mémoire (54) en tant que nouvel état initial de l'huile.

9. Procédé selon la revendication 8, **caractérisé en ce que**
• la détérioration est déterminée à l'aide de la durée de la période, d'un modèle de température, d'un modèle de dégradation de l'huile ou d'une courbe de dégradation de l'huile.

10. Procédé selon l'une quelconque des revendications 7 à 9, **caractérisé en ce que** la température d'usure T₁ se situe dans un ordre de 230° à 300°C.

11. Procédé selon l'une quelconque des revendications 7 à 10, **caractérisé en ce que**
• lors du calcul de l'état de l'huile, la température de l'huile est comparée avec une température de crête T₂ critique et
• lors d'un dépassement de la température de crête T₂ critique, un état critique de l'huile C est constaté.

12. Procédé selon l'une quelconque des revendications 7 à 11, **caractérisé en ce que** détermination de la température de l'huile s'effectue de la sorte que pendant le fonctionnement du véhicule électrique, la température de l'huile est dérivée d'une température des composants mesurée en continu.

13. Programme informatique, qui comporte des instructions logicielles, qui lorsqu'elles sont exécutées par le calculateur du frein à lamelles selon la revendication 1, exécutent un procédé selon l'une quelconque des revendications 7 à 12.
